Europäisches Patentamt

European Patent Office

Office européen des brevets

(11) Veröffentlichungsnummer: **0 380 641 B1**

(12) **EUROPÄISCHE PATENTSCHRIFT**

(45) Veröffentlichungstag der Patentschrift: **29.12.93**

(21) Anmeldenummer: **89908991.6**

(22) Anmeldetag: **27.07.89**

(86) Internationale Anmeldenummer:
**PCT/EP89/00889**

(87) Internationale Veröffentlichungsnummer:
**WO 90/00938 (08.02.90 90/04)**

(51) Int. Cl.⁵: **B05B 7/18**, B23K 9/12

(54) **DRAHTPISTOLE MIT IMPULSMODULIERTER MOTORSTEUERUNG.**

(30) Priorität: **27.07.88 DE 3825532**

(43) Veröffentlichungstag der Anmeldung:
**08.08.90 Patentblatt 90/32**

(45) Bekanntmachung des Hinweises auf die
Patenterteilung:
**29.12.93 Patentblatt 93/52**

(84) Benannte Vertragsstaaten:
**CH FR GB IT LI**

(56) Entgegenhaltungen:
**EP-A- 142 915**
**FR-A- 1 128 618**
**US-A- 3 906 184**

(73) Patentinhaber: **THE PERKIN-ELMER CORPORA-
TION**
**Main Avenue**
**Norwalk Connecticut 06432(US)**

(72) Erfinder: **HERBER, Ralph**
**Philipp-Wasserburg-Str. 60**
**D-6500 Mainz(DE)**
Erfinder: **EICHHORN, Karsten**
**Hügelstr. 166**
**D-6000 Frankfurt 50(DE)**

(74) Vertreter: **Patentanwälte Grünecker, Kinkeldey, Stockmair & Partner**
**Maximilianstrasse 58**
**D-80538 München (DE)**

**Beschreibung**

Die Erfindung betrifft eine Drahtpistole mit einer Vorschubeinrichtung für den Draht mit einem von einem Gleichstrommotor angetriebenen Antriebsrad für den Draht und einer den Draht gegen das Antriebsrad drückenden Gegenrolle.

Derartige Drahtpistolen werden beim sogenannten Flammspritzen eingesetzt, wobei der Draht durch die Vorschubeinrichtung einem Gaskopf mit einer Spritzdüse zugeführt wird. In dem Gaskopf, in den zusammen mit Sauerstoff oder Luft ein brennbares Gas eingeleitet wird, kommt es zum Abschmelzen und zur Zerstäubung des Drahtmaterials, das zusammen mit dem verbrannten Gas aus der Düse ausgestoßen wird. Je nach Anwendungsfall sind unterschiedliche Spritzmengen und dadurch unterschiedliche Vorschubgeschwindigkeiten des Drahtes erforderlich.

Aus der französischen Patentschrift No. 1 128 618 ist eine solche Drahtpistole bekannt.

Bekannte Drahtpistolen der eingangs erwähnten Art haben den Nachteil, daß zur Abdeckung des gesamten Vorschubgeschwindigkeitsbereiches ein Schaltgetriebe oder mehrere komplett auswechselbare Getriebe vorgesehen sein müssen. Insbesondere bei niedrigen Vorschubgeschwindigkeiten, d.h. bei niedrigen Motordrehzahlen, reicht das Drehmoment des Motors für die Drahtförderung, insbesondere bei dicken und damit langsam abschmelzenden sowie biegesteifen Drähten, nicht aus. Der Einbau eines Schaltgetriebes führt zu großen Abmessungen und zu hohem Gewicht der Drahtpistole. Ein kompletter Getriebewechsel bei Änderung der Drahtvorschubgeschwindigkeit bzw. Änderung der Drahtdicke ist aufwendig und zeitraubend.

Eine Drahtpistole eines elektrischen Lichtbogenschweißgeräts mit einer Drahtvorschubmotorsteuerung mittels Spannungspulsbreitensteuerung ist aus der europäischen Patentschrift No. 0 142 915 bekannt.

Es ist die Aufgabe der Erfindung, eine Drahtpistole der eingangs erwähten Art zu schaffen, bei der weder eine Getriebeumschaltung noch ein Getriebewechsel erforderlich ist, wenn die Vorschubgeschwindigkeit oder die Drahtdicke geändert werden.

Erfindungsgemäß wird diese Aufgabe so gelöst, daß an dem Gleichstrommotor zur Steuerung der Vorschubgeschwindigkeit aufeinanderfolgende Betriebsspannungsimpulse mit veränderbarer Impulsbreite anlegbar sind, und daß eine elektronische Vierquadrantensteuerung zum Steuern des Motors vorhanden ist, wobei die elektronische Steuerschaltung zwei als unabhängig voneinander steuerbare Spannungsschalter wirkende Teile besitzt und der Motor zwischen diesen beiden Spannungschaltern angeordnet ist und in Reihe mit den beiden Spannungsschaltern verbunden ist.

Im Gegensatz zur früher verwendeten Analogsteuerung, bei der zur Steuerung der Drahtvorschubgeschwindigkeit nur die Betriebsspannung verändert werden konnte, erfolgt bei der erfindungsgemäßen Lösung durch Variation der Impulslänge- bzw. -frequenz zusätzlich zur Impulshöhe auch eine Steuerung des Motordrehmoments, so daß insbesondere bei niedrigen Motordrehzahlen ein ausreichend großes Drehmoment für die Förderung des Drahtes zur Verfügung steht.

Die Motorsteuerung erfolgt besonders zweckmäßig bei einer konstanten Impulsfrequenz von 18 kHz, wobei zur Einstellung unterschiedlicher Vorschubgeschwindigkeiten die Impulshöhe sowie für unterschiedliche Drehmomentanforderungen die Impulsbreite variiert wird.

Die Steuerung des Motors erfolgt vorteilhaft über eine separate Steuerschaltung. Darüber hinaus ist es von Vorteil, eine Einrichtung zur Regelung der Vorschubgeschwindigkeit des Drahtes vorzusehen. Insbesondere dazu ist der Motor mit einem Tachometer für die Messung der Motordrehzahl zu verbinden. Durch Messen des Ist-Wertes der Motordrehzahl kann ein Regelsignal für die Abweichung der Vorschubgeschwindigkeiten vom Soll-Wert gebildet werden.

Die Ermittlung von Steuersignalen erfolgt zweckmäßig durch ein Mikroprozessorsystem, das eingangsseitig unter anderem mit dem Tachometer verbunden ist. Für die Regelung der Vorschubgeschwindigkeit, insbesondere für eine Schlupfregelung, ist es zweckmäßig, ein den Draht abtastendes Meßrad für die Messung des Ist-Wertes der Vorschubgeschwindigkeit vorzusehen, sowie dafür zu sorgen, daß die Einrichtung zur Regelung der Vorschubgeschwindigkeit des Drahtes eine Vorrichtung zur Änderung des Anpreßdrucks der Gegenrolle in Abhängigkeit von einer durch Einwirkung der Regelungseinrichtung auf den Motorantrieb nicht einregelbaren Soll-Wertabweichung umfaßt.

Eine weitere vorteilhafte Ausgestaltung der Erfindung besteht darin, daß die Drehachse der Gegenrolle oder/und die. Drehachse des Antriebsrades einen Verstellbereich für die Anpassung der Vorschubeinrichtung an verschiedene Durchmesser des Drahtes aufweist.

Weitere vorteilhafte Ausgestaltungen der Erfindung gehen aus den Unteransprüchen hervor.

Die Erfindung soll nun anhand von Ausführungsbeispielen und der beiliegenden Zeichnung weiter erläutert und beschrieben werden. Es zeigen

Fig. 1      ein Ausführungsbeispiel für eine erfindungsgemäße Drahtpistole zum Flammspritzen,

Fig. 2      ein Diagramm, in dem schematisch die erfindungsgemäße, impulsförmige Betriebsspannungsversorgung für den Antriebsmotor dargestellt ist

Fig. 3    schematisch eine Vorschubeinrichtung für eine erfindungsgemäße Drahtpistole mit Regelung der Vorschubgeschwindigkeit durch Steuerung des Antriebsmotors und des Anpreßdrucks der Gegenrolle an das Antriebsrad,

Fig. 4    ein schematisches Schaltbild für die Endstufe eines Transistorservoverstärkers wie er in der vorliegenden Erfindung eingesetzt werden kann,

Fig. 5    ein vereinfachtes Prinzipschaltbild zur Erläuterung der Funktion der in Fig. 4 dargestellten Endstufe und

Fig. 6    schematische Darstellungen des zeitlichen Verlaufs von vier verschiedenen Spannungen an der in Fig. 4 gezeigten Endstufe und zwar in der ersten Reihe der Verlauf der Spannung $U_1(t)$, in Zeile 2 der Verlauf der Spannung $U_2(t)$, in Zeile 3 der Verlauf der Spannung $U_A(t) = U_1(t) - U_2(t)$ und in Zeile 4 der Verlauf der Spannung $U_1(t) + U_2(t)$.

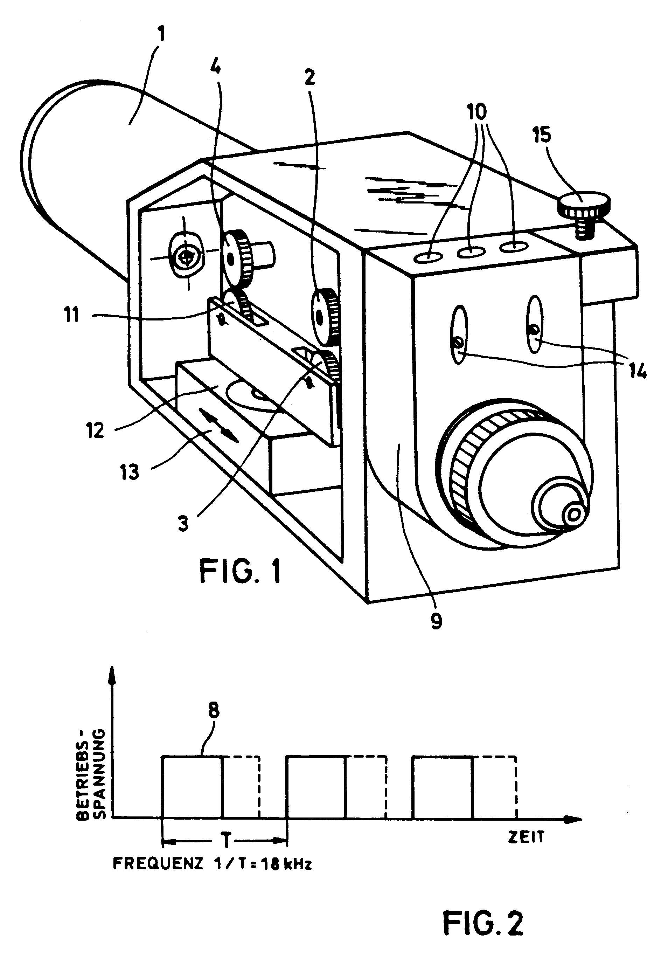

In Fig. 1, die vor allem zur Verdeutlichung des Gesamtaufbaus einer Drahtpistole dient, ist mit 1 der Gleichstrommotor für den Antrieb des Antriebsrades 2 bezeichnet, durch das der Draht in den Gaskopf 9 mit den Gaseinlässen 10 befördert wird. Der mit in Langlöchern 14 geführten Schrauben befestigte Gaskopf 9 ist im vorliegenden Ausführungsbeispiel zur Anpassung an unterschiedliche Lagen der Drahtlängsachse von Drähten mit unterschiedlichem Durchmesser mit Hilfe der Spindel 15 verschiebbar.

Für den Andruck des Drahtes gegen das Antriebsrad ist eine Gegenrolle 3 vorgesehen, die zusammen mit einem Gegenrad 11, das den Draht gegen ein Meßrad 4 für die Messung des Ist-Wertes der Vorschubgeschwindigkeit des Drahtes drückt, auf einem Waagebalken 12 drehbar gelagert ist, an dem eine im vorliegenden Ausführungsbeispiel als Druckzylinder ausgebildete Andruckvorrichtung 13 angreift.

Beim Ausführungsbeispiel gemäß der Fig. 2 erfolgt die erfindungsgemäße Steuerung des erforderlichen Drehmomentes des Motors dadurch, daß die Breite der Betriebsspannungsimpulse 8, wie das in der Fig. 2 durch die gestrichelten Linien angedeutet ist, varriert wird.

Durch diese impulsbreitenmodulierte Steuerung, insbesondere eine Vier-Quadranten-Steuerung mit einer konstanten Impulsfrequenz von 18 kHZ, wird erreicht, daß im Gegensatz zu früheren Drahtpistolen mit analoger Steuerung der Drehzahl des Antriebsmotors, bei der zur Verringerung der Motordrehzahl die Betriebsspannung herabzusetzen war, innerhalb des Gesamtbereichs der Vorschubgeschwindigkeit keine Getriebeumschaltung oder Auswechslung eines Getriebes erforderlich ist. Durch die erfindungsgemäße impulsförmige Spannungszuführung, bei der auch eine Frequenzmodulierung oder eine kombinierte Impulsbreiten-Frequenzmodulierung denkbar wäre, steht auch bei sehr niedrigen Vorschubgeschwindigkeiten, d.h. bei sehr niedrigen Drehzahlen, ein ausreichend hohes Drehmoment für die Beförderung des Drahtes in den Gaskopf zur Verfügung, wobei sich herausgestellt hat, daß in weiten Bereichen Proportionalität zwischen der Motordrehzahl und der Impulshöhe (Amplitude) der Betriebsspannung sowie zwischen dem Motordrehmoment und der Impulslänge besteht.

Für dickere Drähte ist ein höheres Drehmoment des Motors erforderlich. Durch die erfindungsgemäße Lösung können sämtliche für die Drahtpistole vorgesehenen Drahtdicken ohne Getriebeumschaltung oder Getriebewechsel verarbeitet werden, da der Motor die erforderlichen höheren Drehmomente durch erhöhte Stromaufnahme aufbringt.

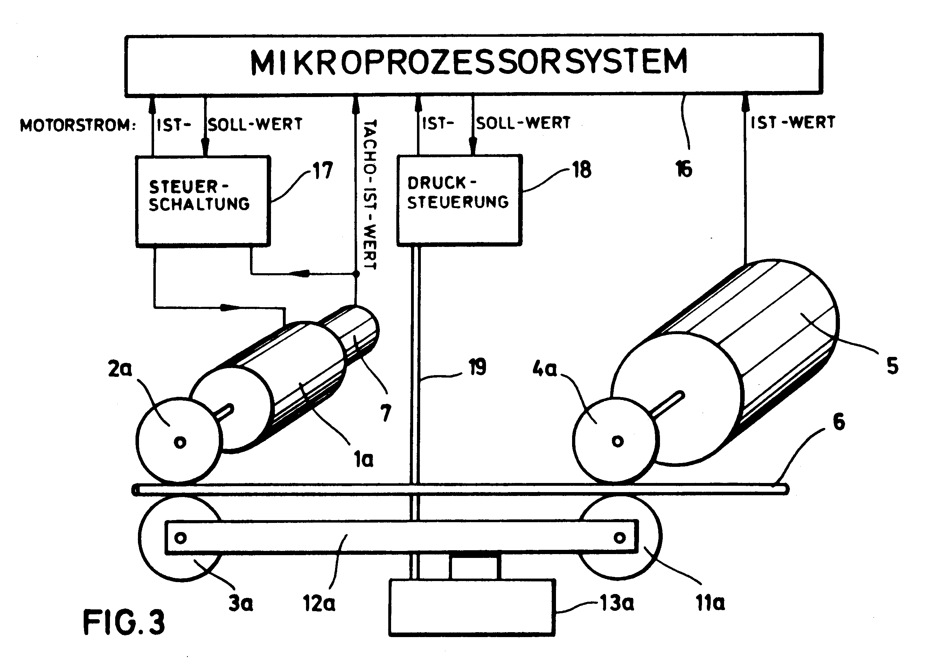

Die erfindungsgemäße Motorsteuerung läßt sich vorteilhaft in ein Regelungssystem für die Regelung der Vorschubgeschwindigkeit des Drahtes einbinden. Bei dem in Fig. 3 schematisch dargestellten Ausführungsbeispiel für eine solche Regeleinrichtung der Vorschubgeschwindigkeit des Drahtes ist mit 2a das durch den Motor 1a angetriebene Antriebsrad bezeichnet, gegen das der Draht 6 durch die Gegenrolle 3a gepreßt ist. Das den Draht abtastende Meßrad 4a für die Messung des Ist-Wertes der Vorschubgeschwindigkeit mit dem Gegenrad 11a ist mit einem inkrementalen Geber 5 verbunden, der ein der Vorschubgeschwindigkeit entsprechendes digitales Signal an ein vorgesehenes Mikroprozessorsystem 16 abgibt. Das Mikroprozessorsystem 16 ermittelt Steuersignale für die Regelung der Drahtvorschubgeschwindigkeit, die einer vorgesehenen Steuerschaltung 17 für den Antriebsmotor und einer Drucksteuereinrichtung 18 zugeführt werden, wobei die Drucksteuereinrichtung über eine Druckleitung 19 auf einen Druckzylinder 13a wirkt, der gegen den Waagebalken 12a drückt, auf dem die Gegenrolle 3a und das Gegenrad 11a gelagert sind. Änderungen des Anpreßdruckes der Gegenrolle gegen das Antriebsrad können durch Änderung des Drucks im Druckzylinder und/oder durch Verschiebung des Druckzylinders längs des Waagebalkens bewirkt werden.

Durch die vorgesehene Steuerschaltung wird der Antriebsmotor 1a in der erfindungsgemäßen Weise mit Betriebsspannungsimpulsen versorgt. Der Motor ist zweckmäßig mit einem Tacho 7 für die Messung des Ist-Wertes der Motordrehzahl verbunden, durch den sowohl dem Mikroprozessor als auch der Steurschaltung einer Rückmeldung für die Regelung zugeführt werden kann.

Durch einen weiten Verstellbereich des Druckzylinders 13a können vorteilhaft Drähte mit unterschiedlichen Drahtdurchmesser verarbeitet werden. Entsprechend diesem Verstellbereich kann der Waagebalken über eine Lenkerverbindung mit der Gehäusewand der Drahtpistole beweglich gehaltert und durch aus der Gehäusewand in Langlöcher im Waagebalken hinein vorstehende Führungsstifte geführt sein.

Geräte, mit denen eine Impulsbreitensteuerung erfolgen kann, sind bekannt. Beispielsweise sei auf das bekannte Gerät "Transistor-Servoverstärker Serie 5k bzw. 20k der Firma F. A. Seidel, 4000 Düsseldorf 34 verwiesen. Aufgrund der im folgenden näher beschriebenen Eigenschaften hatte sich herausgestellt, daß diese Geräte als für die Lösung der erfindungsgemäßen Aufgabe besonders geeignet anzusehen sind.

Dank einer neuartigen Modulationstechnik werden vom Motor oder den Drosseln keine hörbaren Modulationstöne ausgesandt, das heißt, das von vielen getakteten Verstärkern her bekannte lästige Pfeifen oder Heulen entfällt völlig. Die Eisenverluste in Motor und Drosseln (Ummagnetisierungs-, bzw. Hystereseverlustre) sind gegenüber herkömmlichen Modulationsverfahren um ca. eine Zehnerpotenz geringer.

Die Geräteserie 20k enthält eine galvanische Trennung zwischen Steuerseite und Lastseite, so daß für die Energieversorgung statt eines Trenntrafos auch ein Spartransformator verwendet werden kann. Das Gehäuse ist elektrisch vom Gerät isoliert.

Die Geräteserie 5k zeichnet sich vor allem durch die Selbstkühlung aus, das heißt es ist kein Lüfter für die Kühlung erforderlich. Der Aufbau ist weitgehend offen, das heißt ohne besonderes Gehäuse.

Beide Geräteserien enthalten einen Drehstrom-Brückengleichrichter für die Stromversorgung und eine großzügig dimensionierte Ballastschaltung.

Die Servoverstärker können in Standard-Ausführung (150V) mit jeder beliebigen Nennspannung im Bereich von 60 bis 150V betrieben werden. Darüber hinaus gibt es eine Serie mit erweitertem Spannungsbereich (200V), die sogar Nennspannungen von 60 bis 200V zuläßt. Die jeweils gewünschte Nennspannung wird ausschließlich durch die Sekundärspannung des Netztransformators festgelegt. Hierbei ist nur darauf zu achten, daß die gleichgerichtete Spannung auch bei vollem Impulsstrom nicht unter 50V absinken kann, sowie darauf, daß die Leerlaufspannung auch im ungünstigsten Fall auf nicht mehr als 175V (bzw. 230V bei 200V-Geräten) ansteigt. Die zugehörigen Effektivspannungen für den Höchstwert betragen $125V_{eff}$ bzw.

$163V_{eff}$ im Leerlauf. Bei Nichtbeachtung dieser Forderung sind Ausfälle in der Ballastschaltung möglich.

Die Baugröße des Netztrafos liegt je nach Anwendungsfall meist erheblich unter dem Produkt aus Nennstrom und Nennspannung, vor allem dann, wenn nur selten hohe Drehzahlen benötigt werden. Diese Tatsache läßt sich dadurch erklären, daß die Endstufe dem Transformator immer nur diejenige Energie entnimmt, die sie auch an den Motor weitergibt. Diese Energie ist aber nicht nur vom Ausgangsstrom, sondern ebenso auch von der Ausgangsspannung abhängig. Die Geräte-Endstufe bewirkt nach Art eines Spannungswandlers eine Transformation, wobei z.B. bei langsam laufendem Motor aus der relativ hohen Zwischenkreisspannung bei geringem Stromverbrauch die niedrige Ankerspannung bei großem Ankerstrom umgeformt wird. So fließt zum Beispiel im Extremfall "Kurzschluß an den Motorklemmen" selbst bei 100 Amp Ausgangsstrom nur ein Transformatorenstrom von ca. 4,5 $A_{eff}$ zum Gleichrichter.

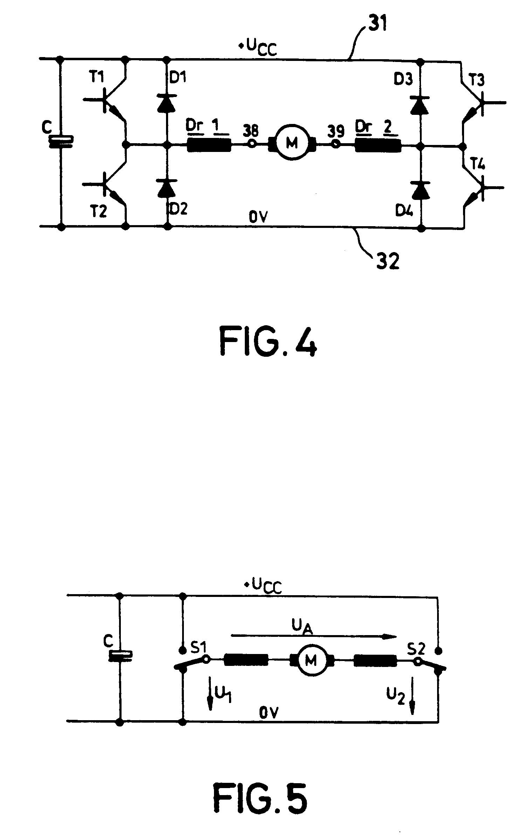

In Fig. 4 ist schematisch die Schaltung einer Endstufe eines Transistor-Servoverstärkers gezeigt. Zwischen den Leitungen 36 und 31, die auf Null Volt bzw. + $U_{CCV}$ liegen, sind ein Zwischenkreiskondensator C, 2 Paar von jeweils über ihre Kollektor-Emitterstrecken in Reihe geschaltete Transistoren T1 und T2 sowie T3 und T4 sowie zwei Paar von in Reihe geschalteten Freilaufdioden D1 und D2 sowie D3 und D4 jeweils zueinander parallel geschaltet. Die Verbindungspunkte der beiden Transistoren T1 und T2 sowie der Freilaufdioden D1 und D2 sind mit einer Seite einer Speicherdrossel Dr1 verbunden, während die Verbindungspunkte der beiden Transistoren T3 und T4 sowie der Freilaufdioden D3 und D4 jeweils mit einer Seite einer Speicherdrossel Dr2 verbunden sind. Die Speicherdrossel Dr1 ist sodann über einen Gleichstrommotor M mit der Speicherdrossel Dr2 in Reihe geschaltet.

Für die nun folgende Erläuterung der Wirkungsweise dieser Endstufe sei entsprechend der Fig. 5 vereinfachend angenommen, daß jede Hälfte der Endstufe wie ein idealer Umschalter (ohne Umschaltpause oder überlappen) arbeitet. In dieser Darstellung sind die Möglichkeit der Stromschalter zwischen den Transistoren T1, T2 und den Freilaufdioden D1 und D2 durch den Umschalter $S_1$ und die möglichen Stromflußrichtungen der Transistoren T3 und T4 sowie der Freilaufdioden D3 und D4 durch den Umschalter $S_2$ schematisch angezeigt. Die Betrachtungsweise gemäß dem vereinfachten Prinzipschaltbild der Fig. 5 ist korrekt, da auch beim tatsächlichen Betrieb der Endstufe jeweils ein Transistor und eine Diode (T1 mit D2 und T4 mit D3) wie ein solcher Umschalter wirken. Hierbei läuft je nach Energie- und Stromrichtung der restliche Teil der Endstufe "blind" mit, so daß die tatsächlich vorhandenen Umschaltpausen zwischen den Transistoren nicht wirksam werden.

Die Endstufe arbeitet mit Spannungseinprägung, d.h. der Motor liegt ständig je nach Tastung an einer mehr oder weniger hohen Gleichspannung mit niedrigem Innenwiderstand. Die Induktivität der Speicherdrosseln ist so bemessen, daß zwar einerseits die Welligkeit des Ausgangsstroms (Formfaktor) trotz des rechteckförmigen Spannungsverlaufs gering ist, andererseits ist sie jedoch noch so gering, daß sie das dynamische Verhalten des Motors praktisch nicht beeinflußt. Für den Motor ist deshalb nur der arithmetische Mittelwert der Differenzspannung $U_1 - U_2 = U_A$ (ermittelt über eine Taktperiode) von Bedeutung. Da an dem Motor M in den Figuren 4 5 nur die Spannungsdifferenz $U_A = U_1 - U_2$ anliegt, ist die treibende Motorspannung gleich Null, wenn die beiden Spannungen $U_1$ und $U_2$ gleich sind.

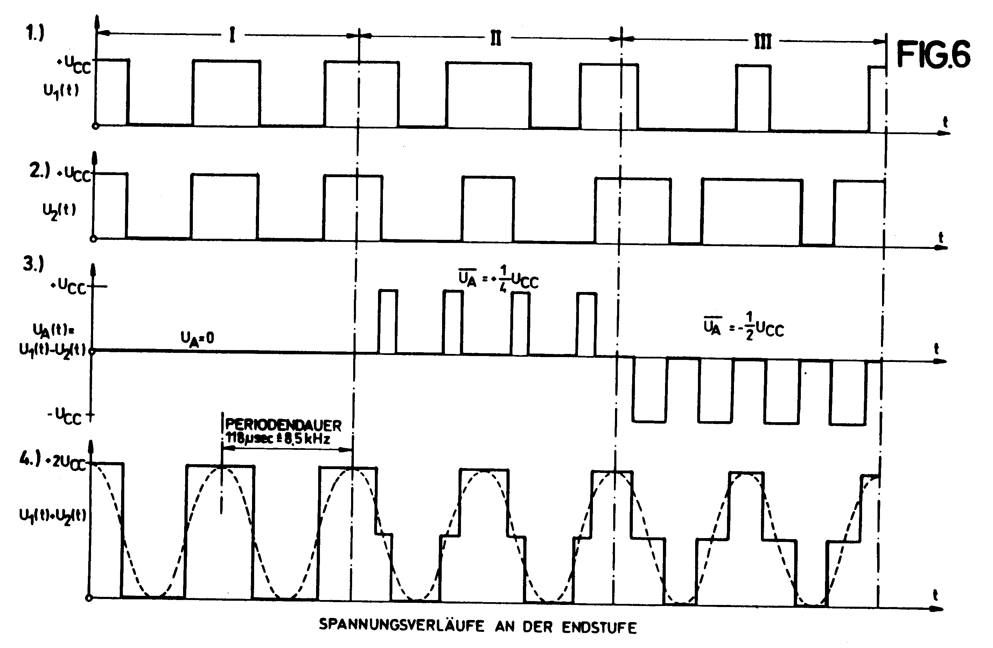

In der Fig. 6 sind in den drei Spalten I, II und III drei verschiedene Ansteuerungszuständen des Motors M mit den typischen zeitlichen Spannungsverläufen der Spannung $U_1$, $U_2$ und $U_A$ in den Zeilen 1., 2. und 3. dargestellt. Im Ansteuerungszustand I ist die Differenzspannung $U_A = 0$, das heißt auf den Motor wird keine Antriebskraft ausgeübt. In dem Ansteuerungszustand II erfolgt ein Vorwärtslauf des Motors und in dem Ansteuerungszustand III wird der Motor in der entgegengesetzten Drehrichtung zu dem Ansteuerungszustand II angetrieben. Wie aus den Ansteuerungszuständen II und III zu ersehen ist, erfolgt ein Antrieb des Motors in der einen oder der anderen Richtung jeweils dann, wenn die Impulsbreiten der Spannungen $U_1$ und $U_2$ zeitlich voneinander abweichen. Es ist interessant darauf hinzuweisen, daß im zeitlichen Verlauf der Ausgangsspannung $U_A$ eine frequenzverdopplung gegenüber dem Spannungsverlauf an jeder der beiden Ausgangsleitung $U_1$ und $U_2$ zu beobachten ist. Dies bedeutet, daß trotz der relativ niedrigen Taktfrequenz von 8,5 kHz die Stromwelligkeit eine Grundfrequenz von 17 kHz aufweist. Da diese Frequenz für menschliche Ohren praktisch unhörbar ist, entfällt damit das von anderen Konzepten her bekannte Modulationspfeifen.

Dennoch gehören die Servoverstärker nicht zur Kategorie der Hochfrequenzgeräte, die als solche ab einer Betriebsfrequenz vom 10 kHz genehmigungspflichtig wären. Für den Gesamtstörpegel maßgebend ist nämlich bei vorschriftsmäßigem Anschluß nur die Summe der Einzelstörpegel auf den Ausgangsleitungen gegenüber Erde, und diese Summe enthält, wie aus der Zeile 4. zu ersehen ist, als Grundfrequenz nur die einfache Taktfrquenz von 8,5 kHz (siehe $U_1(t) + U_2(t)$. Die Periodendauer beträgt hier 118 s, was 8,5 kHz entspricht.

Ein wesentliches Merkmal des hier beschriebenen Pulsbreitenmodulationsverfahrens ist gegenüber den herkömmlichen Modulationsverfahren (mit einfacher Diagonalumschaltung), daß im Stillstand überhaupt keine Wechselstrombelastung vorhanden ist und selbst im ungünstigsten Fall (bei $U_A = 1/2\ U_{CC}$) die Wechselspannung über der Last nicht mehr gleich der zweifachen, sondern nur noch der einfachen Betriebsspannung ist. Die durch Hystereseverluste bedingte Motorerwärmung (bei Motoren mit eisenbehaftetem Anker) fällt hierdurch praktisch völlig weg, während diese früher ein sehr ernst zu nehmender Lastminderungsfaktor war. Ebenso sind hierdurch Speicherdrosseln von so geringer Baugröße möglich, daß diese sogar noch bei 20 kW Nennleistung im Verstärkergehäuse untergebracht werden können.

**Patentansprüche**

1. Drahtpistole, mit einer Vorschubeinrichtung für den Draht (6) mit einem von einem Gleichstrommotor (1, 1a) angetriebenen Antriebsrad (2, 2a) für den Draht (6) und einer den Draht gegen das Antriebsrad (2, 2a) drückenden Gegenrolle (3, 3a), **dadurch gekennzeichnet**, daß an dem Gleichstrommotor (1, 1a) zur Steuerung der Vorschubgeschwindigkeit aufeinanderfolgende Betriebsspannungsimpulse mit veränderbarer Impulsbreite anlegbar sind, und daß eine elektronische Vierquadrantensteuerung zum Steuern des Motors vorhanden ist, wobei die elektronische Steuerschaltung zwei als unabhängig voneinander steuerbare Spannungsschalter wirkende Teile besitzt und der Motor zwischen diesen beiden Spannungschaltern angeordnet ist und in Reihe mit den beiden Spannungsschaltern verbunden ist.

2. Drahtpistole nach Anspruch 1, **dadurch gekennzeichnet**, daß eine konstante Impulsfrequenz von 18 kHz vorgesehen ist.

3. Drahtpistole noch Anspruch 1 oder 2, **dadurch gekennzeichnet,** daß eine Steuerschaltung für die Versorgung des Motors (1,1a) mit Betriebsspannungsimpulsen vorgesehen ist.

4. Drahtpistole nach einem der Ansprüche 1 bis 3, **dadurch gekennzeichnet**, daß eine Einrichtung zur Regelung der Vorschubgeschwindigkeit des Drahtes vorgesehen ist.

5. Drahtpistole nach einem der Ansprüche 1 bis 4, **dadurch gekennzeichnet**, daß der Motor (1,1a) mit einem Tachometer (7) für die Messung der Motordrehzahl verbunden ist.

**6.** Drahtpistole nach Anspruch 5, **dadurch gekennzeichnet**, daß die Steuerschaltung für die Versorgung des Motors (1,1a) mit Betriebsspannungsimpulsen eingangsseitig mit dem Tachometer (7) verbunden ist.

**7.** Drahtpistole nach einem der Ansprüche 1 bis 6, **dadurch gekennzeichnet**, daß ein Mikroprozessorsystem für die Ermittlung von Steuersignalen vorgesehen ist.

**8.** Drahtpistole nach Anspruch 7, **dadurch gekennzeichnet**, daß das Mikroprozessorsystem eingangsseitig mit dem Tachometer (7) verbunden ist.

**9.** Drahtpistole nach Anspruch 7 oder 8, **dadurch gekennzeichnet**, daß das Mikroprozessorsystem ausgangsseitig mit der Steuerschaltung für die Versorgung des Motors (1,1a) mit Betriebsspannungsimpulsen verbunden ist.

**10.** Drahtpistole nach Anspruch 9, **dadurch gekennzeichnet**, daß ein den Draht abtastendes Meßrad (4,4a) für die Messung des Ist-Wertes der Vorschubgeschwindigkeit vorgesehen ist.

**11.** Drahtpistole nach Anspruch 9 oder 10, **dadurch gekennzeichnet**, daß die Einrichtung zur Regelung der Vorschubgeschwindigkeit des Drahtes eine Vorrichtung zur Änderung des Anpreßdrucks der Gegenrolle (3,3a) in Abhängigkeit von einer durch Einwirkung der Regelungseinrichtung auf den Motorantrieb nicht einregelbaren Soll-Wertabweichung aufweist.

**12.** Drahtpistole nach einem der Ansprüche 1 bis 11, **dadurch gekennzeichnet**, daß die Drehachse der Gegenrolle (3,3a) oder/und die Drehachse des Antriebsrades (2,2a) einen Verstellbereich für die Anpassung der Vorschubgeschwindigkeit an verschiedene Durchmesser des Drahtes aufweist.

## Claims

**1.** Wire gun provided with a feed device for the wire (6) comprising a drive wheel (2, 2a), driven by a direct current motor (1, 1a), for the wire (6) and a coacting roller (3, 3a) pressing the wire against the drive wheel (2, 2a), characterized in that successive operating voltage pulses having a variable pulse width can be applied to the direct current motor (1, 1a) in order to control the rate of feed, and in that an electronic four-quadrant control system is provided to control the motor, the electronic control circuit having two parts acting as voltage switches controllable independently of one another and the motor being arranged between these two voltage switches and being connected in series with the two voltage switches.

**2.** Wire gun according to Claim 1, characterized in that a constant pulse frequency of 18 kHz is provided.

**3.** Wire gun according to Claim 1 or 2, characterized in that a control circuit for supplying the motor (1, 1a) with operating voltage pulses is provided.

**4.** Wire gun according to one of Claims 1 to 3, characterized in that a device for regulating the rate of feed of the wire is provided.

**5.** Wire gun according to one of Claims 1 to 4, characterized in that the motor (1, 1a) is connected to a tachometer (7) for measuring the motor speed.

**6.** Wire gun according to Claim 5, characterized in that the control circuit for supplying the motor (1, 1a) with operating voltage pulses is connected on the input side to the tachometer (7).

**7.** Wire gun according to one of Claims 1 to 6, characterized in that a microprocessor system for the determination of control signals is provided.

**8.** Wire gun according to Claim 7, characterized in that the microprocessor system is connected on the input side to the tachometer (7).

**9.** Wire gun according to Claim 7 or 8, characterized in that the microprocessor system is connected on the output side to the control circuit for supplying the motor (1, 1a) with operating voltage pulses.

**10.** Wire gun as claimed in Claim 9, characterized in that a measuring wheel (4, 4a) scanning the wire is provided for the measurement of the actual value of the rate of feed.

**11.** Wire gun according to Claim 9 or 10, characterized in that the device for regulating the rate of feed of the wire has a device for varying the contact pressure of the coacting roller (3, 3a) in dependence on a deviation from the desired value which cannot be regulated by the action of the regulating device on the motor drive.

**12.** Wire gun according to one of Claims 1 to 11, characterized in that the axis of rotation of the coacting roller (3, 3a) and/or the axis of rotation of the drive wheel (2, 2a) has an adjustment range for adaptation of the rate of feed to different diameters of the wire.

## Revendications

**1.** Pistolet à fil métallique, comprenant un dispositif d'avance pour le fil (6) avec une roue d'entraînement (2, 2a) pour le fil (6) entraînée par un moteur à courant continu (1, 1a) et un contre-galet (3, 3a) pressant le fil contre la roue d'entraînement (2, 2a), **caractérisé** par le fait que des impulsions successives de voltage de service à largeur modifiable peuvent être appliquées sur le moteur à voltage continu (1, 1a) pour la commande de la vitesse d'avance et qu'il existe une commande électronique à quatre quadrants pour commander le moteur, le circuit de commande électronique possédant deux parties agissant comme des commutateurs de voltage pouvant être commandés indépendamment l'un de l'autre et le moteur étant disposé entre ces deux commutateurs de voltage et étant relié en série avec les deux commutateurs de voltage.

**2.** Pistolet à fil métallique selon la revendication 1, **caractérisé** par le fait qu'il est prévu une fréquence d'impulsions contante de 18 kHz.

**3.** Pistolet à fil métallique selon la revendication 1 ou 2, **caractérisé** par le fait qu'il est prévu un circuit de commande pour l'alimentation du moteur (1, 1a) avec des impulsions de voltage de service.

**4.** Pistolet à fil métallique selon l'une des revendications 1 à 3, **caractérisé** par le fait qu'il est prévu un dispositif pour le réglage de la vitesse d'avance du fil.

**5.** Pistolet à fil métallique selon l'une des revendications 1 à 4, **caractérisé** par le fait que le moteur (1, 1a) est relié à un tachymètre (7) pour la mesure de la vitesse de rotation du moteur.

**6.** Pistolet à fil métallique selon la revendication 5, **caractérisé** par le fait que le circuit de commande pour l'alimentation du moteur (1, 1a) avec des impulsions de voltage de service est relié côté entrée au tachymètre (7).

**7.** Pistolet à fil métallique selon l'une des revendications 1 à 6, **caractérisé** par le fait qu'il est prévu un système à microprocesseur pour l'obtention de signaux de commande.

**8.** Pistolet à fil métallique selon la revendication 7, **caractérisé** par le fait que le système à microprocesseur est relié côté entrée au tachymètre (7).

**9.** Pistolet à fil métallique selon la revendication 7 ou 8, **caractérisé** par le fait que le système à microprocesseur est relié côté sortie au circuit de commande pour l'alimentation du moteur (1, 1a) avec des impulsions de voltage de service.

**10.** Pistolet à fil métallique selon la revendication 9, **caractérisé** par le fait qu'il est prévu une roue de mesure (4, 4a) balayant le fil pour la mesure de la valeur instantanée de la vitesse d'avance.

**11.** Pistolet à fil métallique selon la revendication 9 ou 10, **caractérisé** par le fait que le dispositif de réglage de la vitesse d'avance du fil présente un dispositif destiné à modifier la pression d'appui du contre-galet (3, 3a) en fonction d'un écart par rapport à une valeur de consigne qui ne peut pas être ajusté en faisant agir le dispositif de réglage sur l'entraînement du moteur

**12.** Pistolet à fil métallique selon l'une des revendications 1 à 11, **caractérisé** par le fait que l'axe de rotation du contre-galet (3, 3a) et/ou l'axe de rotation de la roue d'entraînement (2, 2a) présente une zone de réglage pour adapter la vitesse d'avance à différents diamètres du fil.

**FIG. 1**

BETRIEBS-SPANNUNG

ZEIT

T

FREQUENZ 1/T=18 kHz

**FIG. 2**

FIG.3

EP 0 380 641 B1

FIG. 4

FIG. 5

**FIG.6**

SPANNUNGSVERLÄUFE AN DER ENDSTUFE

1.) $\cdot U_{CC}$  $U_1(t)$

2.) $\cdot U_{CC}$  $U_2(t)$

3.) $\cdot U_{CC}$  $U_A(t) = U_1(t) - U_2(t)$  $-U_{CC}$  $U_A = 0$  $\overline{U_A} = \cdot\frac{1}{4}U_{CC}$  $\overline{U_A} = -\frac{1}{2}U_{CC}$

4.) $\cdot 2U_{CC}$  $U_1(t)\cdot U_2(t)$

PERIODENDAUER 118µsec ≙ 8,5 kHz

EP 0 380 641 B1